# EUROPÄISCHE PATENTSCHRIFT

(11) **EP 1 229 307 B1**
(45) Veröffentlichungstag und Bekanntmachung des Hinweises auf die Patenterteilung: **21.07.2004**
(21) Anmeldenummer: 02100074.0
(22) Anmeldetag: 29.01.2002
(51) Int. Cl.: G01D 5/16, G01B 7/30

(54) **Anordnung zum Erfassen des Drehwinkels eines drehbaren Elements**
Device for detecting the angle of rotation of a rotatable element
Dispositif destiné à la détection de l'angle de rotation d'un élément rotatif

(30) Priorität: 31.01.2001 DE 10104116
(43) Veröffentlichungstag der Anmeldung: 07.08.2002
(73) Patentinhaber: Philips Intellectual Property & Standards GmbH, 20099 Hamburg (DE); Koninklijke Philips Electronics N.V., 5621 BA Eindhoven (NL)
(72) Erfinder: Kowalski, Günter, Philips Corp. Intell. Prop. GmbH, 52066, Aachen (DE); Pusch, Stefan, Philips Corp. Intell. Prop. GmbH, 52066, Aachen (DE)
(74) Vertreter: Volmer, Georg, Dipl.-Ing.

(56) Entgegenhaltungen:
- EP-A- 0 671 605
- DE-A- 19 839 446
- US-A- 5 952 825

## Beschreibung

Die Erfindung bezieht sich auf eine Anordnung zum Erfassen des Drehwinkels eines drehbaren Elements, bei der unter Auswertung von magnetisch beeinflußbaren Eigenschaften einer Sensoranordnung ein von dem drehbaren Element erzeugtes oder beeinflußtes erstes Magnetfeld detektierbar und zur Ermittlung des Drehwinkels heranziehbar ist, wobei die Sensoranordnung eine Anzahl von im wesentlichen flächig ausgebildeten und im wesentlichen in einer Fläche angeordneten, magnetfeldempfindlichen Sensorelementen aufweist, die zu wenigstens zwei Brückenschaltungen verschaltet sind, die jede ein einer Funktion des Drehwinkels zugeordnetes Signal liefern, wodurch die Sensoranordnung dazu ausgebildet ist, über einen ersten Winkelbereich einer Richtung des ersten Magnetfeldes eindeutig zuordbare Signale zu liefern, mit Mitteln zum Anlegen eines magnetischen Hilfsfeldes an die Sensoranordnung, mittels derer eine Modifikation der der Richtung des ersten Magnetfeldes zuordbaren Signale zur eindeutigen Zuordnung eines Winkels über einen zweiten Winkelbereich erzielbar ist, wobei die Mittel zum Anlegen des magnetischen Hilfsfeldes an die Sensoranordnung eine im wesentlichen planare Spule umfassen, die mit ihrer flächigen Ausdehnung entlang der flächigen Anordnung der Sensorelemente angeordnet ist.

Aus der DE 198 39 446 A 1 ist eine Anordnung zur Drehwinkelerfassung eines drehbaren Elements bekannt, bei der unter Auswertung von magnetisch beeinflußbaren Eigenschaften einer Sensoranordnung ein von einem drehbaren Element erzeugtes oder beeinflußtes erstes Magnetfeld in einer Auswerteschaltung detektierbar und zur Ermittlung des Drehwinkels heranziehbar ist. Dabei liefert gemäß der Offenbarung der DE 198 39 446 A 1 die Sensoranordnung unter Ausnutzung des magnetoresistiven Effekts über einen ersten Winkelbereich, insbesondere einen Winkelbereich von 180°, einer Richtung des ersten Magnetfeldes eindeutig zuordenbare Signale. Ferner sind Mittel zum Anlegen eines magnetischen Hilfsfeldes an die Sensoranordnung vorgesehen, mittels dessen eine Modifikation der der Richtung des ersten Magnetfeldes zuordenbaren Signale zur eindeutigen Zuordnung eines Winkels über einen zweiten Winkelbereich, insbesondere 360°, erzielbar ist.

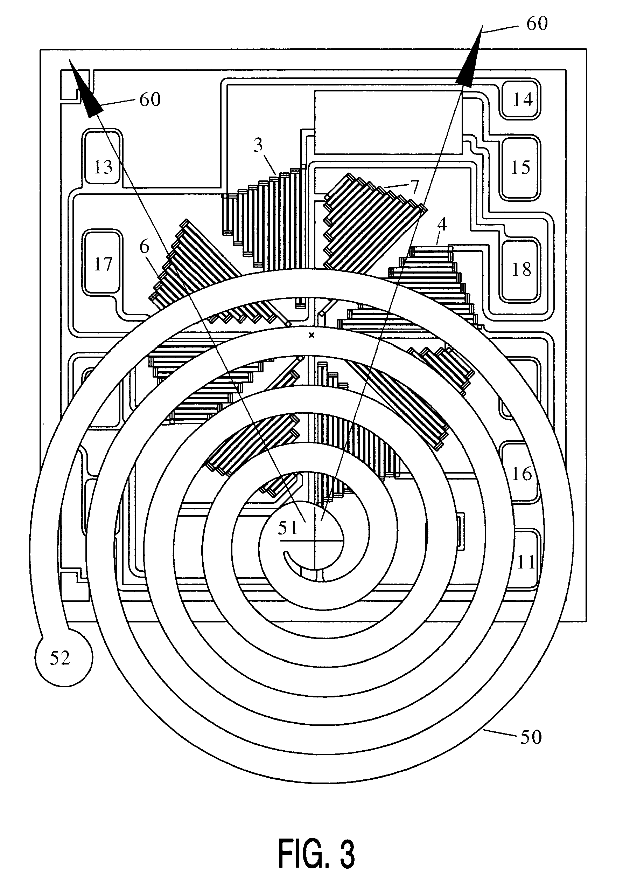

Wie sich aus der dortigen Fig. 3 mit zugehöriger Beschreibung ergibt, umfassen die Mittel zum Anlegen eines magnetischen Hilfsfeldes an die Sensoranordnung eine Dünnschicht-Planarspule, die durch eine nichtleitende Zwischenschicht elektrisch isoliert über zu zwei Wheatstone-Brücken verschalteten AMR-Widerständen angeordnet ist, welche die Sensoranordnung bilden. Die Planarspule besteht aus zwei räumlich getrennt voneinander angeordneten Teilen, die sich jedes über einer räumlich nebeneinander angeordneten Konfiguration bestimmter AMR-Widerstände aus beiden Wheatstone-Brücken erstrecken.

Diese Anordnung ist sehr großflächig ausgebildet. Sie benötigt daher zu dem in der DE 198 39 446 A 1 genannten Aufbau sehr große Bauelementeträger (Substrate). Durch die großflächige Ausbildung der Planarspule ergibt sich außerdem eine hohe Empfindlichkeit gegenüber magnetischen Störfeldern. Für eine monolithische Integration und Miniaturisierung einer solchen Anordnung ist deren großflächige Ausbildung ebenfalls nachteilig.

Aus der EP 0 671 605 A2 ist ein Winkelsensor mit mindestens zwei berührungslos messenden und winkelversetzt zueinander angeordneten Sensoreinheiten bekannt, deren Sensorspannungen gleichartige, aber winkelversetzt verlaufende, sinusartige Funktionen (Sensorkennlinie) des zu messenden Winkels α gegenüber einem drehbaren Element sind. Dieser Winkelsensor ist auf einem Chip angeordnet und umfaßt auf diesem zwei Sensoreinheiten mit Brückenelementen, die derart ineinander verschachtelt sind, daß auf ein Brückenelement der einen Sensoreinheit jeweils ein Brückenelement der anderen Sensoreinheit mit 45° räumlicher Verschiebung um einen gemeinsamen Mittelpunkt folgt. Durch eine mit den Brückenelementen gekoppelte Auswerteschaltung kann eine ein Maß für den Winkel α bildende Winkelsensorspannung eindeutig über einen Winkelbereich von bis zu 180° erzeugt werden.

Die Erfindung hat die Aufgabe, eine Anordnung der eingangs genannten Art in der Weise auszubilden, daß mit einer kompakten, einfachen und preiswerten Anordnung eine eindeutige Messung über einen größeren Winkelbereich, vorzugsweise bis 360°, ermöglicht wird.

Erfindungsgemäß wird diese Aufgabe bei einer Anordnung zum Erfassen des Drehwinkels eines drehbaren Elements, wie sie der eingangs genannten Art entspricht, dadurch gelöst, daß die Sensorelemente jeder der Brückenschaltungen sternförmig angeordnet sind, daß die Sensorelemente der verschiedenen Brückenschaltungen sternförmig konzentrisch ineinander verschachtelt sind und daß die im wesentlichen planare Spule eine im wesentlichen spiralförmig konzentrische, planare Wicklung entlang ihrer flächigen Ausdehnung umfaßt.

Durch die Kombination der kompakten Winkelsensoreinheit mit einer sehr einfach ausgebildeten, planaren Spule wird eine sehr einfache und kompakte Baueinheit mit nur einer einfachen Sensoranordnung erhalten, die einfach und preiswert herstellbar ist, sich gut für eine Miniaturisierung eignet und eine geringe Störempfindlichkeit aufweist.

An dieser Stelle sei angemerkt, daß in der Beschreibung der DE 198 39 446 A 1 ein Hinweis dahingehend enthalten ist, daß eine Hilfsfelderzeugung durch eine Planarspule der dortigen Art auch bei einer alternativen Anordnung der AMR-Widerstände gemäß der in der EP 0 671 605 A2 beschriebenen sternförmigen Ineinanderschachtelung möglich sein soll. Die in der DE 198 39 446 A 1 gezeigte Ausbildung der Planarspule liefert jedoch in Kombination mit der Anordnung der AMR-Widerstände gemäß der in der EP 0 671 605 A2 beschriebenen sternförmigen Ineinanderschachtelung kein brauchbares Ergebnis. Eine Anregung zur Ausbildung der Planarspule in der Art der vorliegenden Erfindung wird nicht gegeben und ist durch die Druckschrift auch sonst nicht nahegebracht.

Außerdem sei angemerkt, daß aus der Druckschrift US-A-5 952 825 eine integrierte Magnetfeldsensoranordnung bekannt ist, die in einer elektrischen Brückenschaltung angeordnete Magnetfeldsensorelemente aufweist. Eine erste Spiralspule ermöglicht eine Setz- und Rücksetzfunktion. Zweite und dritte Spulen sind angeordnet zum Führen eines gemeinsamen Stromes und zum Erzeugen magnetischer Felder, die nützlich sind für Anwendungen zu Prüfzwecken, zur Kompensation, Kalibrierung und Rückkopplung. Die gezeigte Magnetfeldsensoranordnung umfaßt vier magnetoresistive Elemente mit magnetoresistiven Streifen, die räumlich alle zueinander parallel angeordnet und elektrisch in Reihe geschaltet sind. Diese Magnetfeldsensoranordnung weist eine magnetfeldempfindliche Richtung auf.

Die Spulen sind mit rechteckförmigen, spiralartigen Spulen gebildet, die am Ort der Magnetfeldsensorelemente wenigstens weitgehend homogene Magnetfelder vorgegebner Richtung erzeugen und daher in ihren Abmessungen die Magnetfeldsensorelemente um ein mehrfaches überragen müssen. Dadurch ergeben sich zwangsläufig große Abmessungen für die gesamte Magnetfeldsensoranordnung. Hinzu kommt, daß die gezeigte Anordnung zur Winkelmessung nicht geeignet ist.

Eine besonders vorteilhafte Ausgestaltung der erfindungsgemäßen Anordnung zeichnet sich dadurch aus, daß die im wesentlichen spiralförmig konzentrische, planare Wicklung der im wesentlichen planaren Spule und die aus den im wesentlichen sternförmig konzentrisch ineinander verschachtelt angeordneten Sensorelementen gebildete Sensoranordnung mit ihren Zentren wenigstens weitgehend zusammenfallen. Dadurch wird ein besonders kompakter Aufbau mit minimalem Flächenbedarf erhalten.

Bei der erfindungsgemäßen Anordnung ist es nicht erforderlich, in der Ebene, in der die Sensorelemente angeordnet sind, ein homogenes Magnetfeld zu erzeugen; vielmehr ist es ausreichend, dem Magnetfeld eine definierte Richtung zu geben. Dies kann nach einer anderen, vorteilhaften Ausgestaltung der Erfindung in einfacher Weise dadurch geschehen, dass die im wesentlichen spiralförmig konzentrische, planare Wicklung der im wesentlichen planaren Spule und die aus den im wesentlichen sternförmig konzentrisch ineinander verschachtelt angeordneten Sensorelementen gebildete Sensoranordnung um ein vorgegebenes Maß exzentrisch zueinander angeordnet sind. Dadurch stellt sich in der Ebene der Sensorelemente eine Vorzugsrichtung des Magnetfeldes ein. Allerdings ergibt sich für diese exzentrische Anordnung ein gegenüber der konzentrischen Anordnung leicht erhöhter Flachenbedarf.

Für eine zumindest im wesentlichen konzentrische Anordnung der planaren Spule zu der Sensoranordnung ist es vorteilhaft und sinnvoll, wenn nach einer Fortbildung der Erfindung für die Auswertung der magnetisch beeinflußbaren Eigenschaften der Sensoranordnung zum Erfassen des Drehwinkels des drehbaren Elements lediglich von Halbbrücken der Brückenschaltungen hervorgerufene Signale herangezogen werden. Durch Abgriff der Signale lediglich von Halbbrücken läßt sich erreichen, dass möglichst nur eine Richtung des magnetischen Hilfsfeldes in die Auswertung der von der Sensoranordnung gelieferten Signale einfließt.

Vorzugsweise ist bei der erfindungsgemäßen Anordnung die im wesentlichen planare Spule monolithisch auf der Sensoranordnung integriert. Diese Herstellungsart erlaubt eine besonders kostengünstige und präzise Fertigung einer sehr kompakten Bauform. Die Herstellung der im wesentlichen planaren Spule kann dadurch mit derjenigen der Sensoranordnung in einem gemeinsamen Fertigungsprozeß zusammengefaßt werden.

Anordnungen der erfindungsgemäßen Art finden Verwendung in allen Bereichen, in denen einfache, preiswerte, kompakte und robuste Sensoren für große Winkelbereiche benötigt werden. Ein bevorzugtes Einsatzfeld stellt die Automobiltechnik dar, aber auch zB. der Ersatz von Schleiferpotentiometern durch kontaktlose Drehwinkelaufnehmer in weiten Bereichen der Elektrotechnik und Elektronik.

In der Zeichnung, in deren einzelnen Figuren übereinstimmende Elemente mit identischen Bezugszeichen versehen sind, zeigen
- Fig. 1: eine Sensoranordnung gemäß der in der EP 0 671 605 A2 beschriebenen Gestaltung,
- Fig. 2: ein erstes Ausführungsbeispiel der Erfindung mit einer im wesentlichen konzentrischen Ausrichtung der im wesentlichen planaren Spule zu der aus im wesentlichen sternförmig konzentrisch ineinander verschachtelt angeordneten Sensorelementen gebildete Sensoranordnung und
- Fig. 3: ein zweites Ausführungsbeispiel der Erfindung mit einer exzentrischen Ausrichtung der planaren Spule zu der Sensoranordnung

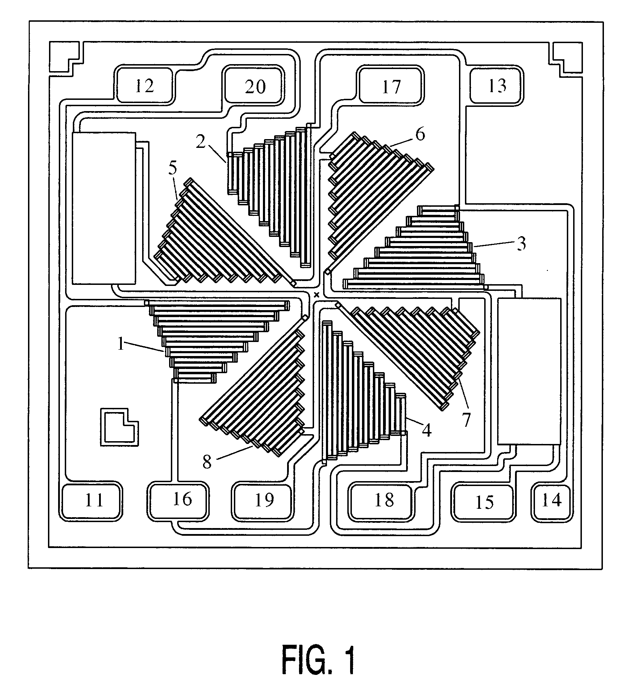

Die Sensoranordnung nach Fig. 1 umfaßt eine erste Brückenschaltung aus vier im wesentlichen flächig ausgebildeten und im wesentlichen in einer Flache angeordneten, magnetfeldempfindlichen Sensorelementen 1, 2, 3, 4 sowie eine zweite Brückenschaltung aus vier im wesentlichen flächig ausgebildeten und im wesentlichen in einer Flache angeordneten, magnetfeldempfindlichen Sensorelementen 5, 6, 7, 8. Die Sensorelemente 1, 2, 3, 4 bzw. 5, 6, 7, 8 jeder der Brückenschaltungen sind sternförmig angeordnet; außerdem sind die Sensorelemente 1,2,3,4 einerseits bzw. 5, 6, 7, 8 andererseits der verschiedenen Brückenschaltungen sternförmig konzentrisch ineinander verschachtelt. Dadurch folgt auf ein Sensorelement 1, 2, 3 bzw. 4 der einen Brückenschaltung jeweils ein Sensorelement 5, 6, 7 bzw. 8 der anderen Brückenschaltung mit einer räumlichen Verdrehung von 45° um einen gemeinsamen Mittelpunkt, der in der Fig. 1 als Kreuz angedeutet ist. Die einzelnen Brükkenschaltungen werden isoliert gegeneinander über Kontaktflächen 11 bis 16 für die erste Brückenschaltung 1, 2, 3, 4 bzw. 17 bis 20 für die zweite Brückenschaltung 5, 6, 7, 8 zum Abgriff der einer Funktion des Drehwinkels zugeordneten Signale elektrisch angeschlossen.

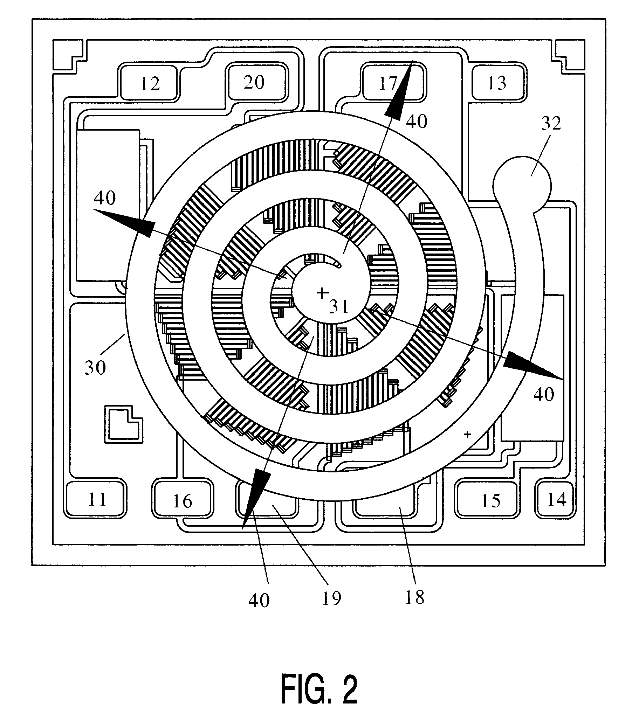

Fig. 2 zeigt ein erstes Ausführungsbeispiel der Erfindung Darin ist auf der Sensoranordnung gemäß Fig. 1 eine im wesentlichen spiralförmig konzentrische, planare Wicklung einer im wesentlichen planaren Spule 30 angeordnet, deren Zentrum mit dem Mittelpunkt der Sensoranordnung wenigstens weitgehend zusammenfällt. Die planare Spule 30 ist bevorzugt auf der Sensoranordnung oberhalb einer isolierenden Schicht, die in Fig. 2 der Einfachheit halber nicht dargestellt ist, monolithisch integriert. An ihren Wicklungsenden weist die planare Spule 30 je eine Kontaktfläche 31, 32 auf, über die der planaren Spule 30 ein Strom zur Erzeugung des magnetischen Hilfsfeldes zugeführt werden kann. Die Richtungen der magnetischen Feldlinien dieses magnetischen Hilfsfeldes sind in Fig. 2 durch Pfeile 40 angedeutet. Die Feldlinien verlaufen im wesentlichen radial vom im wesentlichen gemeinsamen Mittelpunkt bzw. Zentrum der Sensoranordnung und der planaren Spule nach außen.

Soweit durch die planare Spule Kontaktflächen der Sensoranordnung in der in Fig. 1 gezeigten Konfiguration abgedeckt und damit für eine äußere Kontaktierung der Sensoranordnung unzugänglich werden sollten, läßt sich die räumliche Gestaltung der Kontaktflächen 11 bis 20 entsprechend abändern, ohne dadurch die äußeren Abmessungen der Sensoranordnung nennenswert zu verändern. Dabei kann in einer vorteilhaften Ausführung erleichternd berücksichtigt werden, dass für die Auswertung der Signale von lediglich je einer Halbbrücke jeder der Brückenschaltungen nicht alle Kontaktflachen 11 bis 20 der Sensoranordnung beschaltet werden müssen.

Zur Abstimmung der Dimensionierungen des das magnetische Hilfsfeld erregenden Stromes und der Feldstärke des magnetischen Hilfsfeldes kann die Anzahl der Windungen der planaren Spule angepaßt, beispielsweise gegenüber der dargestellten Form erhöht werden.

In einem zweiten, in Fig. 3 dargestellten Ausführungsbeispiel ist auf der Sensoranordnung, wie sie in Fig. 1 gezeigt ist, eine im wesentlichen spiralförmig konzentrische, planare Wicklung einer im wesentlichen planaren Spule 50 auf der Sensoranordnung um ein vorgegebenes Maß exzentrisch zu deren Mittelpunkt angeordnet, wobei die Sensoranordnung nach Fig. 1 hier um 90° im Uhrzeigersinn gedreht dargestellt ist. Die planare Spule 50 weist an ihren Wicklungsenden Kontaktflachen 51, 52 auf, über die der planaren Spule ein Strom zur Erzeugung des magnetischen Hilfsfeldes zugeführt werden kann. Die Richtungen der magnetischen Feldlinien dieses magnetischen Hilfsfeldes sind in Fig. 3 durch Pfeile 60 angedeutet. Die Feldlinien verlaufen wieder im wesentlichen radial vom Zentrum der planaren Spule nach außen. Da dieses Zentrum jedoch in dieser Ausführung vom Mittelpunkt der Sensoranordnung in vorgegebener Weise räumlich beabstandet ist, verlaufen die Feldlinien des magnetischen Hilfsfeldes nicht mehr radial zur Sensoranordnung, sondern wenigstens überwiegend diagonal dazu. Damit weist das magnetische Hilfsfeld gegenüber der Sensoranordnung eine bevorzugte Richtung auf, wie dies für die gewünschte Winkelmessung ausgenutzt wird.

Ansonsten gilt auch für die Anordnung nach Fig. 3 das für die Anordnung des Ausführungsbeispiels nach Fig. 2 Gesagte.

## Patentansprüche

1. Anordnung zum Erfassen des Drehwinkels eines drehbaren Elements, bei der unter Auswertung von magnetisch beeinflußbaren Eigenschaften einer Sensoranordnung ein von dem drehbaren Element erzeugtes oder beeinflußtes erstes Magnetfeld detektierbar und zur Ermittlung des Drehwinkels heranziehbar ist, wobei die Sensoranordnung eine Anzahl von im wesentlichen flächig ausgebildeten und im wesentlichen in einer Fläche angeordneten, magnetfeldempfindlichen Sensorelementen (1, 2, 3, 4 bzw. 5, 6, 7, 8) aufweist, die zu wenigstens zwei Brückenschaltungen verschaltet sind, die jede ein einer Funktion des Drehwinkels zugeordnetes Signal liefern, wodurch die Sensoranordnung dazu ausgebildet ist, über einen ersten Winkelbereich einer Richtung des ersten Magnetfeldes eindeutig zuordbare Signale zu liefern, mit Mitteln zum Anlegen eines magnetischen Hilfsfeldes an die Sensoranordnung, mittels derer eine Modifikation der der Richtung des ersten Magnetfeldes zuordbaren Signale zur eindeutigen Zuordnung eines Winkels über einen zweiten Winkelbereich erzielbar ist, wobei die Mittel zum Anlegen des magnetischen Hilfsfeldes an die Sensoranordnung eine im wesentlichen planare Spule (30; 50) umfassen, die mit ihrer flächigen Ausdehnung entlang der flächigen Anordnung der Sensorelemente (1, 2, 3, 4 bzw. 5, 6, 7, 8) angeordnet ist,
**dadurch gekennzeichnet, daß** die Sensorelemente (1, 2, 3, 4 bzw. 5, 6, 7, 8) jeder der Brückenschaltungen sternförmig angeordnet sind, daß die Sensorelemente (1, 2, 3, 4 bzw. 5, 6, 7, 8) der verschiedenen Brückenschaltungen sternförmig konzentrisch ineinander verschachtelt sind und daß die im wesentlichen planare Spule (30; 50) eine im wesentlichen spiralförmig konzentrische, planare Wicklung entlang ihrer flächigen Ausdehnung umfaßt.

2. Anordnung nach Anspruch 1,
**dadurch gekennzeichnet, daß** die im wesentlichen spiralförmig konzentrische, planare Wicklung der im wesentlichen planaren Spule (30) und die aus den im wesentlichen sternförmig konzentrisch ineinander verschachtelt angeordneten Sensorelementen (1, 2, 3, 4 bzw. 5, 6, 7, 8) gebildete Sensoranordnung mit ihren Zentren wenigstens weitgehend zusammenfallen (Fig. 2).

3. Anordnung nach Anspruch 2,
**dadurch gekennzeichnet, daß** für die Auswertung der magnetisch beeinflußbaren Eigenschaften der Sensoranordnung zum Erfassen des Drehwinkels des drehbaren Elements lediglich von Halbbrücken der Brückenschaltungen hervorgerufene Signale herangezogen werden.

4. Anordnung nach Anspruch 1,
**dadurch gekennzeichnet, daß** die im wesentlichen spiralförmig konzentrische, planare Wicklung der im wesentlichen planaren Spule (50) und die aus den im wesentlichen sternförmig konzentrisch ineinander verschachtelt angeordneten Sensorelementen (1, 2, 3, 4 bzw. 5, 6, 7, 8) gebildete Sensoranordnung um ein vorgegebenes Maß exzentrisch zueinander angeordnet sind.

5. Anordnung nach einem der vorhergehenden Ansprüche,
**dadurch gekennzeichnet, daß** die im wesentlichen planare Spule (30; 50) monolithisch auf der Sensoranordnung integriert ist.

## Claims

1. An arrangement for detecting the angle of rotation of a rotatable element, in which, while evaluating properties of a sensor arrangement which can be magnetically influenced, a first magnetic field generated or influenced by the rotatable element is detectable and can be used for determining the angle of rotation, the sensor arrangement comprising a plurality of magnetic field-sensitive sensor elements (1, 2, 3, 4 and 5, 6, 7, 8) which are substantially planar and are substantially arranged in one plane, which sensor elements are connected to at least two bridge circuits each supplying a signal assigned to a function of the angle of rotation, whereby the sensor arrangement is adapted to supply signals which are unambiguously assignable to a direction of the first magnetic field via a first angular range, means for supplying a magnetic auxiliary field to the sensor arrangement, by means of which a modification of the signals assignable to the direction of the first magnetic field can be achieved for unambiguous assignment of an angle via a second angular range, the means for applying the magnetic auxiliary field to the sensor arrangement comprising a substantially planar coil (30; 50) arranged with its planar extension along the planar arrangement of the sensor elements (1, 2, 3, 4 and 5, 6, 7, 8), **characterized in that** the sensor elements (1, 2, 3, 4 and 5, 6, 7, 8) of each bridge circuit are arranged in a star-shaped configuration, **in that** the sensor elements (1, 2, 3, 4 and 5, 6, 7, 8) of the different bridge circuits are interleaved in a star-shaped concentric manner, and **in that** the substantially planar coil (30; 50) comprises a substantially spirally concentric, planar winding along its planar extension.

2. An arrangement as claimed in claim 1, **characterized in that** the substantially spirally concentric planar winding of the substantially planar coil (30) and the sensor arrangement constituted by the substantially star-shaped concentrically interleaved sensor elements (1, 2, 3, 4 and 5, 6, 7, 8) at least substantially coincide by way of their centers (Fig.2).

3. An arrangement as claimed in claim 2, **characterized in that** signals which are only generated by half bridges of the bridge circuits are utilized for evaluating the sensor arrangement properties which can be magnetically influenced for detecting the angle of rotation of the rotatable element.

4. An arrangement as claimed in claim 1, **characterized in that** the substantially spirally concentric planar winding of the substantially planar coil (50) and the sensor arrangement constituted by the substantially star-shaped concentrically interleaved sensor elements (1, 2, 3, 4 and 5, 6, 7, 8) are arranged eccentrically to each other by a predetermined extent.

5. An arrangement as claimed in any one of the preceding claims, **characterized in that** the substantially planar coil (30; 50) is monolithically integrated on the sensor arrangement.

## Revendications

1. Dispositif destiné à la détection de l'angle de rotation d'un élément rotatif dans lequel un premier champ magnétique influencé ou produit par l'élément rotatif peut être détecté par l'évaluation des propriétés influençables magnétiquement d'un montage de capteurs et utilisé pour la détermination de l'angle de rotation, le montage de capteurs présentant un nombre d'éléments capteurs (1, 2, 3, 4 ou 5, 6, 7, 8) sensibles au champ magnétique, disposés essentiellement dans un plan et conçus de manière essentiellement plane qui sont montés en deux circuits en pont au moins qui délivrent chacun un signal affecté à une fonction de l'angle de rotation, le montage de capteurs étant conçu de manière à délivrer des signaux à affecter sans équivoque sur une première plage angulaire d'une direction du premier champ magnétique, avec des moyens pour l'application d'un champ magnétique auxiliaire sur le montage de capteurs à l'aide duquel une modification des signaux à affecter à la direction du premier champ magnétique peut être réalisée pour l'affectation sans équivoque d'un angle sur une deuxième plage angulaire, les moyens pour l'application du champ magnétique auxiliaire sur le montage de capteurs comprenant une bobine (30, 50) essentiellement plane qui est disposée avec son extension plane le long de l'agencement plat des éléments capteurs (1, 2, 3, 4 ou 5, 6, 7, 8),
**caractérisé en ce que** les éléments capteurs (1, 2, 3, 4 ou 5, 6, 7, 8) de chacun des circuits en pont sont disposés en forme d'étoile, que les éléments capteurs 1, 2, 3, 4 ou 5, 6, 7, 8) des différents circuits en pont sont imbriqués l'un dans l'autre concentriquement en forme d'étoile et que la bobine essentiellement plane (30,50) comprend un enroulement plat concentrique essentiellement spiralé le long de son extension plane.

2. Dispositif selon la revendication 1, **caractérisé en ce que** l'enroulement plat concentrique essentiellement spiralé de la bobine essentiellement plane (30) et le montage de capteurs formé des éléments capteurs (1, 2, 3, 4 ou 5, 6, 7, 8) imbriqués l'un dans l'autre concentriquement essentiellement en forme d'étoile coïncident, du moins en grande partie, par leur centre (Fig. 2).

3. Dispositif selon la revendication 2,
**caractérisé en ce que** les signaux provoqués uniquement par les demi-ponts des circuits en pont sont utilisés pour l'évaluation des propriétés influençables magnétiquement du montage de capteurs en vue de la détection de l'angle de rotation de l'élément rotatif.

4. Dispositif selon la revendication 1,
**caractérisé en ce que** l'enroulement plat concentrique essentiellement spiralé de la bobine (50) essentiellement plane et le montage de capteurs formé d'éléments capteurs (1, 2, 3, 4 ou 5, 6, 7, 8) imbriqués l'un dans l'autre concentriquement essentiellement en forme d'étoile sont disposés excentriquement l'un par rapport dans une mesure préalablement déterminée.

5. Dispositif selon l'une des revendications précédentes,
**caractérisé en ce que** la bobine (30, 50) essentiellement plane est intégrée monolithiquement sur le montage de capteurs.
